# EUROPÄISCHE PATENTSCHRIFT

(11) **EP 1 356 977 B1**
(45) Veröffentlichungstag und Bekanntmachung des Hinweises auf die Patenterteilung: **18.01.2006**
(21) Anmeldenummer: 03007426.4
(22) Anmeldetag: 03.04.2003
(51) Int. Cl.: B60K 28/06, G06F 3/00

(54) **Blickrichtungsdetektion mittels Mikrophon**
Line-of-Sight detecting through a microphone
Détection de ligne de visée par un microphone

(30) Priorität: 17.04.2002 DE 10217822
(43) Veröffentlichungstag der Anmeldung: 29.10.2003
(73) Patentinhaber: DaimlerChrysler AG, 70567 Stuttgart (DE)
(72) Erfinder: Paviot, Florent, 70794 Filderstadt (DE); Rothe, Siegfried, 73770 Denkendorf (DE)

(56) Entgegenhaltungen:
- DE-A- 19 734 307
- US-A- 4 279 027
- US-A1- 2001 029 416

## Beschreibung

Die Erfindung betrifft ein Verfahren und eine Vorrichtung nach den Oberbegriffen der Patentansprüche 1 und 11.

Zur Steigerung der Fahrzeugsicherheit und des Fahrkomfort verfügen moderne Kraftfahrzeuge in zunehmendem Maße über adaptive Warn- und Informationssysteme, sowie über Assistenzsysteme die ausgehend von der aktuellen Verkehrssituation und dem Zustand eines Fahrzeugführers in der Lage sind autonom Aufgaben im Bereich der Fahrzeugführung zu übernehmen.

So ist aus der DE 197 34 307 C2 eine Vorrichtung zur Überwachung und/oder Beeinflussung des Fahrverhaltens eines Fahrzeugführers bekannt, welche in Abhängigkeit davon, ob dessen Blickrichtung von der Fahrtrichtung abweicht, ein Warnsignal erzeugt oder auf die Lenkung einwirkt. Die Blickrichtung des Fahrzeuglenkers wird hierbei mit einer Kamera ermittelt, mit dem Nachteil, dass insbesondere bei Dunkelheit oder tiefstehender Sonne die Auswertung der Kamerasignale problematisch ist.

Um unabhängig von der aktuellen Beleuchtungssituation, insbesondere auch bei Nacht, einen Fahrzeuglenker mittels eines Kamerasystems beobachten zu können wird in der nachveröffentlichten Patentanmeldung DE 101 60 843 A1 ein Beleuchtungsmittel für Bildaufnahmen zur Mustererkennung in Kraftfahrzeugen beschrieben, welche die Fahrzeuginsassen aktiv mit infrarotem Licht beleuchtet. Um eine Blendung des Fahrzeugführers zu vermeiden kann kein sichtbares Licht zur Beleuchtung verwandt werden, so dass auch zur Bildaufnahme ein gesondertes im unsichtbaren Wellenlängenbereich arbeitendes Kamerasystem verwendet werden muß.

Ausgehend hiervon stellt sich dem Fachmann die Aufgabe, ein Verfahren und eine zur Durchführung des Verfahrens geeignete Vorrichtung zur Blickrichtungserkennung von Personen, insbesondere von Fahrzeuglenkern, zu finden, welche unabhängig von den aktuell vorherrschenden Beleuchtungsbedingungen und ohne Rückgriff auf eine aktive Beleuchtungseinrichtung arbeiten kann.

Die Aufgabe wird zum einen durch ein Verfahren gemäß dem Oberbegriff des Patentanspruches 1 durch die Merkmale des kennzeichnenden Teils gelöst, sowie zum anderen durch eine Vorrichtung nach dem Oberbegriff des Patentanspruchs 11 mittels der Merkmale dessen kennzeichnenden Teils.

Vorteilhafte Ausgestaltungen und Weiterbildungen der Erfindung werden in den Unteransprüchen beschrieben.

In besonders vorteilhafter Weise wird bei der Erfindung die Sprechrichtung einer Person mittels wenigstens eines richtungs-selektiven Mikrofons erkannt und daraus auf deren Blickrichtung geschlossen. Die Möglichkeit aus der erkannten Sprechrichtung auf die Blickrichtung eines Sprechers zu schließen ist für die meisten in der Realität vorkommenden Situationen gegeben, da für gewöhnlich der Sprecher die Person zu der er spricht auch betrachtet öder zumindest im wesentlichen in die Richtung zu schauen trachtet, in welcher sich die Person befindet. Es kann in der Praxis also sehr wohl im allgemeinen davon ausgegangen werden, da die Sprechrichtung mit der Blickrichtung im wesentlichen übereinstimmt.

Nachfolgend wird die Erfindung anhand von Ausführungsbeispielen und einer Figur im Detail erläutert.

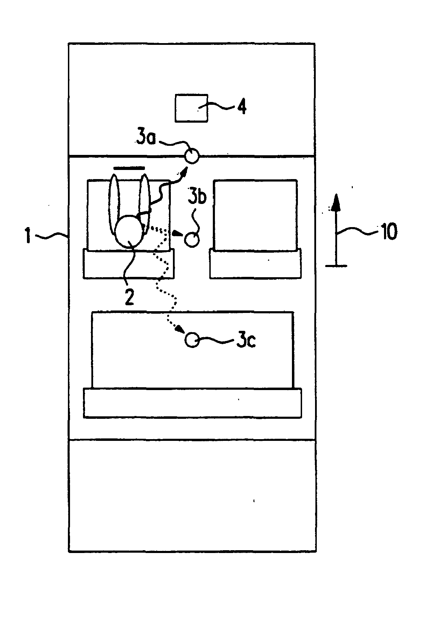

Die Figur zeigt schematisch eine mögliche Realisierung der erfindungsgemäßen Vorrichtung zur Blickrichtungserkennung in einem Kraftfahrzeug.

Bei dem richtungs-selektiven Mikrophon im Rahmen der Erfindung kann es sich entweder um ein Einzelmikrophon oder um ein aus einer Mehrzahl von miteinander in Verbindung stehender Einzelmikrophone gebildeten Mikrofon-Array handeln.

Beispielhaft sei hierbei die Schrift DE 38 43 034 C2 genannt, welche ein Mikrofonsystem, bestehend aus einem einzigen Mikrofon, zur Bestimmung der Richtung einer Schallquelle offenbart, oder auch die DE 34 47 842 A1, welche ein Mikrofon-Array zur Bestimmung der Einfallsrichtung von Schallwellen, bestehend aus einer Mehrzahl von elektroakustischen Wandlern, beschreibt.

Eine beispielhafte Anordnung der erfindungsgemäßen Vorrichtung in einem Kraftfahrzeug zur Bestimmung der Blickrichtung des Fahrzeugführers (2) ist in der Figur aufgezeigt. Hierbei sitzt ein Fahrzeugführer (2) auf dem Fahrersitz eines Kraftfahrzeuges (1) in dessen Innenraum entlang der Längsachse des Fahrzeugs drei als ein Mikrofon-Array zusammenwirkende Mikrofone (3a, 3b, 3c) die von dem Fahrer ausgehende Schallwellen (als Pfeile dargestellt) aufnehmen. Das Mikrofon-Array steht mit einer Einheit zur Verarbeitung der Sprachsignale (4) in Verbindung in welcher erfindungsgemäß die Signale des Mikrofon-Arrays ausgewertet werden. Schaut der Fahrer, wie in dem in der Figur, dargestellten Beispiel in die Fahrtrichtung (10) des Fahrzeugs (Geradeausschau), so wird das von ihm ausgehende Sprachsignal durch das Mikrofon (3a) am stärksten und durch das Mikrofon (3c) am schwächsten empfangen. Die Signalintensität die von Mikrofon (3b) gemessen wird sollte nur gering unter der Signalintensität des an Mikrofon (3a) gemessenen Signals liegen, da es sich zwar in ungünstigeren Winkel zum Fahrzeugführer (Signalquelle) jedoch in wesentlich kleinerem Abstand befindet. Bei der beim Fahrzeugbetrieb häufig vorkommenden Situation, dass sich der Fahrzeugführer seinem Beifahrer oder einem in der Mittelkonsole des Fahrzeugs befindlichen elektronischen Gerät zuwendet, wird sich das Verhältnis der an den Mikrofonen (3a) und (3b) gemessenen Signalpegeln zueinander signifikant, im Bezug auf die Geradeausschau ändern. Noch signifikanter ändern sich die Signalpegel der einzelnen Mikrophone (3a-c) zueinander, wenn sich der Fahrer einer sich auf der Rücksitzbank des Fahrzeugs befindlichen Person zuwendet.

Die in der Figur dargestellte Anordnung des Mikrofon-Arrays ist rein beispielhaft, selbstverständlich sind auch ganz andere Konfigurationen, insbesondere in Abhängigkeit des Anwendungsbereiches denkbar. Im Kraftfahrzeug wäre es beispielsweise auch denkbar vermehrt Mikrofone im Bereich entlang des Armaturenbrettes zu integrieren, um die Blickrichtung des Fahrers im normalen Fahrbetrieb während er unterschiedliche Bereiche der Umgebung durch die Windschutzscheibe beobachtet noch besser bestimmen zu können.

In geschlossenen Räumen, insbesondere einem Kraftfahrzeug, ist aufgrund von Reflexionen des Sprachsignals an unterschiedlichsten Reflexionsflächen eine Lokalisierung des Sprechers und die Erkennung der Sprechrichtung schwierig. In vorteilhafter weise bietet es sich deshalb an, bei der Erkennung der Sprechrichtung Wissen über die Geometrie der Umgebung mit zu berücksichtigen. Hierbei ist es besonders gewinnbringend wenn Kenntnis über die Bedingungen der Schallausbreitung, vor allem in Bezug auf die Reflexionseigenschaften der den Sprecher umgebenden Objekte mit in Betracht gezogen werden kann. Solches Wissen kann zum einen direkt aus den konstruktiven Daten des Umfeldes und dessen bekannten physikalischen Parametern generiert werden, zum anderen ist es auch denkbar auch spezifische Kalibrationsdaten zuzugreifen, welche unter anderem Auskunft über Sprechmuster unterschiedlicher Personen und/oder unterschiedlicher Sprechrichtungen enthalten. Im Rahmen des erfinderischen Verfahrens ist es dann auch in gewinnbringender Weise denkbar, solche Kalibrationsdaten während des Betriebs des Verfahrens zu adaptieren. Eine solche Adaption kann kontinuierlich oder aber auch im Rahmen einer explizit durchgeführten Nachkalibration erfolgen. Hierzu werden im Rahmen einer solchen Nachkalibration, entsprechend dem Vorgehen bei der ursprünglichen Kalibration des Systems, in einer Speichereinheit Sprachmuster unterschiedlicher Personen und/oder Sprachmuster wenigstens einer Person bezüglich unterschiedlicher Sprechrichtungen abgelegt. In vorteilhafter weise kann zum Zwecke der Nachkalibration das Ablageverfahren dabei so abgewandelt werden, dass für Fall, in welchem zu der augenblicklich sprechenden Person und/oder der augenblicklichen Sprechrichtung bereits ein Sprachmuster in der Speichereinheit abgelegt ist, dieses nicht direkt ersetzt wird, sondern nur entsprechend einem geeigneten Algorithmus modifiziert wird. Hierbei ist es denkbar, dass der Algorithmus ein gewichtetes Mittel aus dem bereits abgelegten und dem neuen Sprachmuster errechnet.

Für den Fall, dass das Verfahren zur Blickrichtungsdetektion auf Kalibrationsdaten zurückgreift läßt sich die Erkennungsleistung deutlich steigern, wenn die Kalibration, oder auch die Nachkalibration, nach festen Regeln und Vorgaben erfolgt, dahingehend dass bei der Erzeugung der Sprachmuster beispielsweise bestimmte Worte oder Wortgruppen verwandt werden, oder dass die Sprachmuster durch Sprechen in vorbestimmte, bevorzugte Sprechrichtungen erzeugt werden. So kann das System gezielt in Bezug auf besonders kritische Situationen trainiert werden. Kritische Situationen sind unter anderem das Sprechen in Richtungen, bei welchen unter anderem auf Grund der Reflexionscharakteristik der Umgebung eine Erkennung der Sprechrichtung nur schwer möglich ist, oder bei welchen mit Sicherheit davon ausgegangen werden muß, dass die zu überwachende Person den Blick so stark von dem eigentlich durch sie zu beobachtenden Bereich abgewandt hat, dass daraus ein hohes Gefahrenpotential ausgeht (so beispielsweise in der Situation, in der sich ein Fahrzeugführer den Personen auf den Rücksitzen zuwendet und sich mit diesen unterhält). Zur Erzeugung der Kalibrationsdaten ist es selbstverständlich nicht unbedingt notwendig, dass die entsprechenden Sprachmuster von einer natürlichen Person erzeugt werden, sondern es ist gleichwohl auch denkbar die Sprachmuster synthetisch zu erzeugen. Im Rahmen einer solchen Synthese ist es denkbar Sprachmuster unterschiedlicher Personen miteinander zu verbinden oder aber auf Grund theoretischer Überlegungen und mit Wissen über die konstruktiven Daten des Umfeldes des richtungs-selektiven Mikrofons solche Daten zu schätzen. Die Verwendung solcher synthetischen Kalibrationsdaten bietet sich vor allem für eine werksseitige Voreinstellung des Erkennungssystems an.

In besonders vorteilhafter Weise können, unter anderem zur Verringerung der Gestehungskosten der erfindungsgemäßen Vorrichtung, im Rahmen der Erkennung der Sprechrichtung auch Ergebnisse der Sprachauswertung eines Kommunikationssystems, beispielsweise eine Telefonanlage, genutzt werden. Hierfür geeignete Kommunikationssysteme sind beispielsweise aus der DE 199 38 171 C2 bekannt, welche ein System beschreibt, welches innerhalb eines Personenwagens gezielt akustische Signale aus mehreren vordefinierten Zonen des Fahrgastraumes erfaßt und an definierte Positionen/Zonen innerhalb des Fahrgastraums weiterleitet. Zur Erfassung der akustischen Signale wird unter anderem auch die Verwendung von Mikrofon-Arrays vorgeschlagen. Es ist in erfinderischer Weise nun denkbar ein solches Kommunikationssystem so auszugestalten, dass die Signalverarbeitungseinheit des Kommunikationssystems im Rahmen der Auswertung der Signale der Mikrofon-Arrays eine Erkennungsergebnis in Bezug auf die Sprechrichtung eines Sprechers liefert, oder aber, dass zumindest die Signale der Mikrofon-Arrays an eine gesonderte Erkennungseinheit weitergeleitet werden.

Wenn die erfindungsgemäße Vorrichtung in Verbindung mit Assistenzsystemen steht, können beispielsweise bei der Überwachung eines Fahrzeugführers unterschiedliche Ablenkungen und Unaufmerksamkeiten interpretiert und somit Warn- und Informationssignale jeglicher Art adaptiv und rechtzeitig an den Fahrzeugführer ausgegeben werden, die ihn bei seiner Fahraufgabe erheblich unterstützen.

Selbstverständlich ist es auch denkbar die Erfindung in Kombination mit anderen Sensoren (beispielsweise Kameras oder Infrarot-Konturerkennung) zu betreiben, um die Erkennungsleistung, auch mit Hinblick auf die Erlangung weitergehender Erkenntnisse über die beobachtete Person, weiter zu verbessern. Auf diese Weise lassen sich bekannte Systeme zur Warnsignal- und Informationsdarbietung weiter verbessern.

Die Erfindung ist selbstverständlich nicht nur auf die Verwendung zur Blickrichtungserkennung in einem Kraftfahrzeug beschränkt, sondern kann gleichermaßen in jeglichen technischen Bereichen Anwendung finden, in welchen sich die Aufgabe stellt die Blickrichtung von Personen zu erkennen und auszuwerten.

## Patentansprüche

1. Verfahren zur Blickrichtungserkennung einer Person, insbesondere eines Fahrzeuglenkers,
**dadurch gekennzeichnet,**
**dass** die Blickrichtung aus der Sprechrichtung der sprechenden Person abgeleitet wird, unter der Annahme, dass die Sprechrichtung im wesentlichen mit der Blickrichtung übereinstimmt,
wobei zur Erkennung der Sprechrichtung der Person, die von dieser ausgehenden Sprachsignale mittels wenigstens eines richtungs-selektiven Mikrofons erfasst werden, und aus dem daraus resultierenden Mikrofonsignal auf die Sprechrichtung geschlossen wird.

2. Verfahren nach Anspruch 1, **dadurch gekennzeichnet,**
**dass** die Sprachsignale mittels wenigstens eines richtungsselektives Einzelmikrofon erfasst werden.

3. Verfahren nach Anspruch 2, **dadurch gekennzeichnet, dass** die Sprachsignale mittels wenigstens eines Arrays von miteinander in Verbindung stehender Einzelmikrofone (Mikrofon-Array) erfasst werden.

4. Verfahren nach einem der Ansprüche 1 bis 3, **dadurch gekennzeichnet**, bei der Erkennung der Sprechrichtung, Wissen über die Geometrie des die Person umgebenden Raumes und die damit zusammenhängenden Bedingungen für die Schallausbreitung mit ausgenutzt wird.

5. Verfahren nach einem der Ansprüche 1 bis 4, **dadurch gekennzeichnet**, bei der Erkennung der Sprechrichtung auch Ergebnisse der Sprachauswertung eines Kommunikationssystems genutzt werden, oder dass die Sprachsignale durch ein solches System erfasst werden.

6. Verfahren nach einem der Ansprüche 1 bis 5, **dadurch gekennzeichnet**, bei der Erkennung der Sprechrichtung auf Kalibrationsdaten zurückgegriffen wird, welche Sprachmuster bezüglich unterschiedlicher Personen und/oder unterschiedlicher Sprechrichtungen beinhalten.

7. Verfahren nach Anspruch 6, **dadurch gekennzeichnet, dass** die abgelegten Sprachmuster bzw. Kalibrationsdaten während des Betriebs des Verfahrens an geänderte Situationen, insbesondere Änderung der Sprechweise oder Stimmlage, adaptiert werden.

8. Verfahren nach einem der vorhergehenden Ansprüche, **dadurch gekennzeichnet, dass** zur Kalibration des Verfahrens in einer Speichereinheit Sprachmuster wenigstens einer Person und/oder bezüglich unterschiedlicher Sprechrichtungen abgelegt werden.

9. Verfahren nach Anspruch 8, **dadurch gekennzeichnet, dass** zur Generierung der Sprachmuster für die Kalibration das Verfahren in einem Kalibrationsmodus betrieben wird und die Person deren Sprachmuster abgelegt werden soll, nach festen Regeln und Vorgaben Sprachmuster in das System eingibt.

10. Verfahren nach Anspruch 8, **dadurch gekennzeichnet, dass** die Daten zur Kalibration des Verfahrens nicht direkt von einer natürlichen Person stammen, sondern synthetisch, insbesondere durch Zusammenführung der Sprachmuster mehrerer natürlicher Personen, erzeugt werden.

11. Vorrichtung zur Blickrichtungserkennung einer Person, insbesondere eines Fahrzeuglenkers, **dadurch gekennzeichnet,**
- **dass** die Vorrichtung wenigstens ein richtungs-selektives Mikrofon umfasst, mittels welchem die Sprechrichtung der Person anhand von Sprachsignalen erkannt werden kann,
- und **dass** die Vorrichtung eine Einheit zur Verarbeitung der Sprachsignale und zum Rückschluss auf die Blickrichtung der Person beinhaltet.

12. Vorrichtung nach Anspruch 11, **dadurch gekennzeichnet, dass** wenigstens eines der richtungs-selektiven Mikrofone ein richtungs-selektives Einzelmikrofon ist.

13. Vorrichtung nach einem der Ansprüche 11 oder 12, **dadurch gekennzeichnet, dass** diese ein richtungs-selektiv auswertbares Array aus miteinander in Verbindung stehenden Einzelmikrofone (Mikrofon-Array) umfasst.

14. Vorrichtung nach einem der Ansprüche 11 bis 13, **dadurch gekennzeichnet, dass** die Vorrichtung über eine Speichereinheit verfügt, in welcher Wissen über die die Bedingungen der Schallausbreitung beeinflussenden Geometrie des die Person umgebenden Raumes abgelegt sind, so dass dieses Wissen bei der Erkennung der Sprechrichtung mit ausgenutzt werden kann.

15. Vorrichtung nach einem der Ansprüche 11 bis 14, **dadurch gekennzeichnet, dass** die Vorrichtung zumindest in Einzelelementen Teil eines Kommunikationssystems ist, oder dass zumindest eine Verbindung zu einem solchen System besteht.

16. Vorrichtung nach einem der Ansprüche 11 bis 15, **dadurch gekennzeichnet, dass** die Vorrichtung über eine Speichereinheit verfügt, in welcher Kalibrationsdaten bezüglich der Sprachmuster unterschiedlicher Personen und/oder unterschiedlicher Sprechrichtungen abgelegt sind.

17. Vorrichtung nach Anspruch 16, **dadurch gekennzeichnet, dass** die Vorrichtung über eine Einheit zur Adaption der in der Speichereinheit abgelegten Kalibrationsdaten an sich während des Betriebs des Verfahrens geänderte Situationen, insbesondere Änderung der Sprechweise oder Stimmlage des Sprechers dessen Blickrichtung erkannt werden soll, verfügt.

## Claims

1. Method for the detection of a viewing direction of a person, in particular a driver of a vehicle, **characterized in that** the viewing direction is derived from the speaking direction of the speaking person, assuming that the speaking direction corresponds essentially to the viewing direction, in which case, in order to detect the speaking direction of the person, the speech signals originating from said person are sensed by means of at least one direction-selective microphone, and the speaking direction is determined from the resulting microphone signal.

2. Method according to Claim 1, **characterized in that** the speech signals are sensed by means of at least one direction-selective individual microphone.

3. Method according to Claim 2, **characterized in that** the speech signals are sensed by means of at least one array of individual microphones connected to one another (microphone array).

4. Method according to one of Claims 1 to 3, **characterized in that**, during the detection of the speaking direction, knowledge about the geometry of the space surrounding the person and about the associated conditions for the propagation of sound is also used.

5. Method according to one of Claims 1 to 4, **characterized in that** results of the speech evaluation of a communications system are also used during the detection of the speaking direction, or **in that** the speech signals are sensed by means of such a system.

6. Method according to one of Claims 1 to 5, **characterized in that** during the detection of the speaking direction there is recourse to standardization data which includes speech patterns relating to different persons and/or different speaking directions.

7. Method according to Claim 6, **characterized in that**, while the method is operating, the stored speech patterns and/or standardization data are adapted to changed situations, in particular changes in the way of speaking or register.

8. Method according to one of the preceding claims, **characterized in that**, in order to standardize the method, speech patterns of at least one person and/or speech patterns relating to different speech directions are stored in a storage device.

9. Method according to Claim 8, **characterized in that**, in order to generate the speech patterns for the standardization, the method is operated in a standardization mode and the person whose speech patterns are to be stored inputs speech patterns into the system according to fixed rules and specifications.

10. Method according to Claim 8, **characterized in that**, in order to standardize the method, the data does not originate directly from a natural person but is instead generated synthetically, in particular by combining the speech patterns of a plurality of natural persons.

11. Device for the detection of the viewing direction of a person, in particular of a driver of a vehicle, **characterized**
- **in that** the device comprises at least one direction-selective microphone by means of which the speaking direction of the person can be detected by reference to speech signals,
- and **in that** the device includes a unit for processing the speech signals and for determining the viewing direction of the person.

12. Device according to Claim 11, **characterized in that** at least one of the direction-selective microphones is a direction-selective individual microphone.

13. Device according to one of Claims 11 or 12, **characterized in that**, said device comprises an array which can be evaluated in a direction-selective fashion and comprises individual microphones connected to one another (microphone array).

14. Device according to one of Claims 11 to 13, **characterized in that**, the device has a storage unit in which knowledge about the geometry, influencing the conditions of the propagation of sound, of the space surrounding the person is stored, so that this knowledge can also be used in the detection of the speaking direction.

15. Device according to one of Claims 11 to 14, **characterized in that** the device is part of a communications system, at least in individual elements, or **in that** there is at least one connection to such a system.

16. Device according to one of Claims 11 to 15, **characterized in that** the device has a storage unit in which standardization data relating to the speech patterns of different persons and/or different speaking directions is stored.

17. Device according to Claim 16, **characterized in that**, the device has a unit for adapting the standardization data stored in the storage unit to situations which have changed during the operation of the method, in particular a change in the way of speaking or register of the speaker whose viewing direction is to be detected.

## Revendications

1. Procédé de détection de la ligne de visée d'une personne, notamment d'un conducteur de véhicule, **caractérisé en ce**
**que** la ligne de visée est déduite de la direction de la parole de la personne qui parle en supposant que la direction de la parole coïncide pour l'essentiel avec la ligne de visée,
avec lequel, pour détecter la direction de la parole de la personne, les signaux vocaux émis par celle-ci sont détectés au moyen d'au moins un microphone directionnel et la direction de la parole est déduite à partir du signal de microphone qui en résulte.

2. Procédé selon la revendication 1, **caractérisé en ce que** les signaux vocaux sont détectés au moyen d'au moins un microphone individuel directionnel.

3. Procédé selon la revendication 2, **caractérisé en ce que** les signaux vocaux sont détectés au moyen d'au moins un réseau de microphones individuels reliés les uns aux autres (réseau de microphones).

4. Procédé selon l'une des revendications 1 à 3, **caractérisé en ce que** des connaissances relatives à la géométrie de l'espace qui entoure la personne et aux conditions de propagation du son qui y sont liées sont également utilisées lors de la détection de la direction de la parole.

5. Procédé selon l'une des revendications 1 à 4, **caractérisé en ce que** les résultats de l'analyse de la parole d'un système de communication sont également utilisés lors de la détection de la direction de la parole ou **en ce que** les signaux vocaux sont détectés par un tel système.

6. Procédé selon l'une des revendications 1 à 5, **caractérisé en ce que** lors de la détection de la direction de la parole, on accède à des données de calibrage qui contiennent des modèles de parole de différentes personnes et/ou de différentes directions de la parole.

7. Procédé selon la revendication 6, **caractérisé en ce que** les modèles de parole ou les données de calibrage enregistrés sont adaptés pendant la mise en oeuvre du procédé en fonction des situations changeantes, notamment de la modification de l'élocution ou du registre.

8. Procédé selon l'une des revendications précédentes, **caractérisé en ce que** pour calibrer le procédé, des modèles de parole d'au moins une personne et/ou concernant différentes directions de la parole sont enregistrés dans une unité de mémorisation.

9. Procédé selon la revendication 8, **caractérisé en ce que** pour générer les modèles de parole pour le calibrage, le procédé est mis en oeuvre dans un mode de calibrage et la personne dont il faut enregistrer les modèles de parole entre des modèles de parole dans le système selon des règles et des indications fixes.

10. Procédé selon la revendication 8, **caractérisé en ce que** les données de calibrage du procédé ne sont pas issues directement d'une personne naturelle, mais sont générées de manière synthétique, notamment en regroupant les modèles de parole de plusieurs personnes naturelles.

11. Dispositif de détection de la ligne de visée d'une personne, notamment d'un conducteur de véhicule, **caractérisé en ce**
- **que** le dispositif comprend au moins un microphone directionnel au moyen duquel la direction de la parole de la personne peut être détectée à l'aide de signaux vocaux,
- et en ce que le dispositif comprend une unité pour traiter les signaux vocaux et pour déduire la ligne de visée de la personne.

12. Dispositif selon la revendication 11, **caractérisé en ce qu'**au moins l'un des microphones directionnels est un microphone individuel directionnel.

13. Dispositif selon l'une des revendications 11 ou 12, **caractérisé en ce que** celui-ci comprend un réseau à exploitation directionelle de microphones individuels reliés les uns aux autres (réseau de microphones).

14. Dispositif selon l'une des revendications 11 à 13, **caractérisé en ce que** le dispositif dispose d'une unité de mémorisation dans laquelle sont enregistrées des connaissances relatives à la géométrie de l'espace qui entoure la personne, qui influence les conditions de propagation du son de manière à ce que ces connaissances puissent également être utilisées lors de la détection de la direction de la parole.

15. Dispositif selon l'une des revendications 11 à 14, **caractérisé en ce que** le dispositif fait partie d'un système de communication, au moins par des éléments individuels, ou qu'il existe au moins une liaison avec un tel système.

16. Dispositif selon l'une des revendications 11 à 15, **caractérisé en ce que** le dispositif dispose d'une unité de mémorisation dans laquelle sont enregistrées des données de calibrage relatives aux modèles de parole de différentes personnes et/ou de différentes directions de la parole.

17. Dispositif selon la revendication 16, **caractérisé en ce que** le dispositif dispose d'une unité pour adapter les données de calibrage enregistrées dans l'unité de mémorisation aux situations changeantes pendant la mise en oeuvre du procédé, notamment la modification de l'élocution ou du registre du locuteur dont il faut détecter la ligne de visée.
